Europäisches Patentamt

European Patent Office

Office européen des brevets

(19)

(11) **EP 0 627 589 B1**

(12) **FASCICULE DE BREVET EUROPEEN**

(45) Date de publication et mention
de la délivrance du brevet:
**30.09.1998 Bulletin 1998/40**

(51) Int Cl.⁶: **F16L 9/12**, B29C 47/00,
B29C 47/88, B29C 55/26
// B29K23/00

(21) Numéro de dépôt: **94201483.8**

(22) Date de dépôt: **25.05.1994**

(54) **Tube en polyoléfine biorienté**

Rohr aus biorientiertem Polyäthylen

Bioriented polyethylene pipe

(84) Etats contractants désignés:
**AT BE CH DE DK ES FR GB GR IT LI NL PT SE**

(30) Priorité: **04.06.1993 BE 9300568**

(43) Date de publication de la demande:
**07.12.1994 Bulletin 1994/49**

(73) Titulaire: **SOLVAY (Société Anonyme)**
**B-1050 Bruxelles (BE)**

(72) Inventeur: **Gilliard, Pierre**
**B-1120 Bruxelles (BE)**

(74) Mandataire: **Meyers, Liliane et al**
**Solvay S.A.**
**Direction centrale des recherches**
**Département de la propriété industrielle**
**310, rue de Ransbeek**
**1120 Bruxelles (BE)**

(56) Documents cités:
EP-A- 0 371 769        WO-A-80/02671
US-A- 4 282 277        US-A- 4 820 466

## Description

La présente invention concerne un tube en polyoléfine biorienté présentant des propriétés mécaniques remarquables.

Il est bien connu de réaliser des tubes biorientés à partir de tubes ou de lingots de polyoléfines produits par extrusion, voir par exemple, US-A-4 282 277. A cet effet, la biorientation de tels tubes est généralement obtenue, ainsi qu'il est proposé par A. K. TARAIYA et I. M. WARD (Plastics, Rubber and Composites Processing and Applications 1991, Vol. 15, n° 1, pages 5-11) en conditionnant de tels tubes à une température inférieure à la température de fusion cristalline de leur matériau constitutif et en soumettant ceux-ci, dans cet état, à un étirage biaxial par tirage au travers d'une filière équipée d'un mandrin interne divergent.

Dans un tel procédé en posant :

$D_i$ = diamètre externe initial du tube
$e_i$ = épaisseur initiale de la paroi du tube
$d_i$ = diamètre moyen initial du tube = $D_i$-$e_i$
$D_f$ = diamètre externe final du tube
$e_f$ = épaisseur finale de la paroi du tube
$d_f$ = diamètre moyen final du tube = $D_f$-$e_f$
$\varepsilon_T$ = taux d'étirage transversal = $\dfrac{d_f}{d_i}$
$\varepsilon_L$ = taux d'étirage longitudinal

on a :

$$\frac{D_f}{e_f} = \frac{d_f + e_f}{e_f} = \frac{d_f}{e_f} + \frac{e_f}{e_f} = \frac{d_f}{e_f} + 1 \qquad (1)$$

et :

$$\frac{d_f}{e_f} = \frac{\varepsilon_L \cdot \varepsilon^2{}_T \, d_i}{e_i} \qquad (2)$$

Or, lors de l'orientation de polyoléfine par la technique d'étirage à température inférieure au point de fusion cristalline, il apparaît (ainsi qu'il est montré par Satoyuki Minami : Polymer prep. 1985, 26, p. 245) que pour obtenir un produit final présentant des modules de traction de l'ordre de 3000 MPa dans chaque sens il faut soumettre ces polyoléfines à un taux d'étirage de l'ordre de 6 fois dans chaque sens.

Il en résulte que pour obtenir un tube de polyoléfine présentant un module de traction de l'ordre de 3000 MPa dans chaque sens et un rapport $D_f$/$e_f$ entre son diamètre externe final et son épaisseur finale égal ou inférieur à 100, il faudrait, en tenant compte de la formule (2) mettre en oeuvre un tube initial ayant un rapport $D_i$/$e_i$ entre son diamètre extérieur initial et son épaisseur initiale égal ou inférieur à 1,46.

En effet, dans ce cas, on a en se basant sur les formules ci-avant :

$$\frac{D_f}{e_f} = \frac{d_f}{e_f} + 1 = \frac{\varepsilon_L \cdot \varepsilon^2{}_T \, d_i}{e_i} + 1 = 216 \frac{d_i}{e_i} + 1$$

$$216 \frac{d_i}{e_i} + 1 \leq 100$$

$$\frac{d_i}{e_i} \leq \frac{100-1}{216} = 0,46$$

$$\frac{D_i \text{-} e_i}{e_i} \leq 0,46$$

$$\frac{D_i}{e_i} - 1 \leq 0,46$$

$$\frac{D_i}{e_i} \leq 1,46$$

Or, dans tout tube le rapport $D_i$/$e_i$ doit impérativement être supérieur à 2. En effet, si le rapport entre le diamètre externe et l'épaisseur du tube est seulement égal à 2 le tube ne présente pas d'espace interne et on se trouve donc en présence d'un cylindre plein.

Il en résulte donc, a priori, qu'il n'est pas possible par la technique de biorientation décrite ci-avant, d'obtenir un tube biorienté présentant les caractéristiques précitées en partant d'une ébauche tubulaire.

La demanderesse est cependant parvenue à réaliser un tel tube par un procédé original d'extrusion directe.

La présente invention concerne, dès lors, un tube en polyoléfine biorienté obtenu par extrusion directe qui présente des modules de traction, mesurés à 23°C selon la norme ISO R 527, dans le sens longitudinal et dans le sens transversal d'au moins 3000 MPa et un rapport diamètre externe/-épaisseur de 10 à 100.

Le tube conforme à l'invention convient particulièrement pour réaliser des canalisations de transport et de distribution de fluides sous pression. Par ailleurs, le tube conforme à l'invention, peut, après sa production, être découpé longitudinalement et être ouvert et aplani pour donner des feuilles directement exploitables ou qui peuvent être mises en forme par des procédés classiques de traitement à froid tels qu'un emboutissage pour donner des objets conformés. Il convient évidemment que ces feuilles ne soient pas portées à leur température de fusion durant de tels traitements.

Pour pouvoir produire un tel tube, la demanderesse utilise un procédé original d'extrusion directe et en continu de structures tubulaires biorientées en polyoléfines qui comporte les particularités suivantes :

- on met en oeuvre, par extrusion, une polyoléfine présentant, de préférence, une distribution de poids moléculaires telle que le rapport entre son poids moléculaire moyen en poids et son poids moléculaire moyen en nombre soit au moins égal à 10,

- durant son extrusion, on soumet ladite polyoléfine à un étirage biaxial sous un gradient de vitesse sensiblement constant dans le sens de l'écoulement par passage au travers d'une filière annulaire divergente de profil hyperbolique, la polyoléfine fondue pénétrant dans ladite filière étant préalablement conditionnée thermiquement à une température supérieure à sa température de fusion mais inférieure à sa température de cristallisation sous l'étirage biaxial induit par ladite filière, les températures de fusion et de cristallisation étant déterminées pour la valeur de pression règnant à l'entrée de la filière annulaire divergente,

- on soumet ensuite la structure biorientée ainsi produite à une réfrigération rapide pour amener sa température à une température inférieure à son point de cristallisation à pression atmosphérique, cette réfrigération étant réalisée, en l'absence de déformations, par passage de la structure au travers d'une section de filière droite annulaire subséquente de manière à parfaire la cristallisation induite durant l'étirage biaxial.

La polyoléfine mise en oeuvre peut être quelconque et se présenter notamment sous la forme d'un homopolymère ou d'un copolymère d'oléfine, la demanderesse préférant toutefois mettre en oeuvre des homopolymères de l'éthylène ou du propylène.

Il est également préférable de mettre en oeuvre des polyoléfines très visqueuses. A cet effet, on préfère mettre en oeuvre des polyoléfines ayant un indice de fluidité sous 21,6 kg inférieur à 10 selon la norme ASTM D 1238 (1990) (g/10 min).

Par ailleurs, il est également avantageux de fixer la température de la filière annulaire divergente à une valeur supérieure de 1 à 5 °C à celle de la polyoléfine pénétrant dans celle-ci.

Enfin, pour éviter toute tendance au blocage de la structure extrudée, il peut se révéler avantageux de prévoir une lubrification des parois de la filière. Cette lubrification peut être obtenue en utilisant une filière dont les parois sont rendues glissantes par un traitement préalable adéquat tel qu'un revêtement de résine fluorée TEFLON® et/ou en injectant en divers endroits de la filière un lubrifiant tel qu'une huile de silicone.

Avec ce procédé il est également possible de réaliser des tubes présentant les modules de traction revendiqués et un rapport diamètre externe/épaisseur supérieur à 100. Toutefois, de tels tubes peuvent présenter une résistance à la pression interne et une rigidité qui risquent de laisser à désirer pour certaines applications et notamment pour le transport de fluides sous pression.

Le produit conforme à l'invention est, par ailleurs, illustré par l'exemple unique de réalisation pratique qui suit.

<u>Exemple</u>

On a alimenté une extrudeuse équipée d'une filière telle que décrite ci-avant par un polyéthylène de haute densité ayant les caractéristiques suivantes :

HLMI (21,6 Kg) = 2,5
Température de fusion à 200 bars = 138 °C
Température de début de cristallisation : 155 °C (sous un étirage à gradient de vitesse uniaxial de $0,1\ S^{-1}$ et une pression de 200 bars)

Les conditions d'extrusion ont été réglées de façon telle que la température de la polyoléfine pénétrant dans la filière s'élève à 151 °C et on a thermostatisé la filière annulaire divergente à une température de 154 °C.

La géométrie de la filière annulaire divergente, préalablement revêtue de résine fluorée TEFLON, a été choisie de façon telle que le polymère soit étiré sous un gradient de vitesse constant (moyenné sur la section de passage) de $0,1\ S^{-1}$ dans le sens longitudinal, que les taux d'étirage longitudinaux et transversaux soient respectivement de 4 et de 2 et que la stucture tubulaire quittant cette filière présente un diamètre externe de 15 cm et une épaisseur de 2 mm.

La réfrigération directe de la structure produite a été assurée par passage de cette structure au travers d'une section de filière droite annulaire subséquente, également revêtue de résine fluorée TEFLON, d'une longueur de 10 cm maintenue à 80-90 °C.

La lubrification au niveau de la filière a été, en outre, assurée par injection d'un film d'une épaisseur de 1 à 10 microns d'huile silicone.

Durant cet essai, qui a été réalisé sous une pression d'extrusion totale de 500 bars, on a constaté qu'une structure tubulaire a été produite de façon très stable et durable avec une vitesse de production de 50 cm/min.

Le tube ainsi obtenu présente un rapport diamètre externe/épaisseur de 75 et des modules de traction, mesurés à 23 °C selon la norme ISO R 527, vitesse de traction 1 m/min, de 4300 MPa dans le sens longitudinal et de 3000 MPa dans le sens transversal.

**Revendications**

1. Tube en polyoléfine biorienté obtenu par extrusion directe, présentant des modules de traction, mesurés à 23 °C selon la norme ISO R527 , dans le sens longitudinal et dans le sens transversal d'au moins 3000 MPa et un rapport diamètre externe/épaisseur de 10 à 100.

2. Tube selon la revendication 1, caractérisé en ce qu'il est constitué d'un polymère dérivé de l'éthylène.

3. Tube selon la revendication 1, caractérisé en ce qu'il est constitué d'un polymère dérivé du propylène.

4. Tube selon l'une des revendications 2 ou 3, caractérisé en ce que le polymère est un homopolymère.

5. Tube selon la revendication 1, caractérisé en ce qu'il est constitué de polyéthylène de haute densité.

6. Tube selon la revendication 1, caractérisé en ce qu'il est constitué d'une polyoléfine ayant un indice de fluidité sous 21,6 kg inférieur à 10 selon la norme ASTM D 1238 (g/10 min).

7. Tube selon la revendication 1, caractérisé en ce qu'il est constitué d'une polyoléfine présentant une distribution de poids moléculaires telle que le rapport entre son poids moléculaire moyen en poids et son poids moléculaire moyen en nombre soit au moins égal à 10.

8. Tube selon l'une des revendications précédentes, présentant un module d'élasticité d'au moins 4300 MPa dans le sens longitudinal.

**Patentansprüche**

1. Rohr aus biorientiertem Polyolefin, das durch direkte Extrusion erhalten wird, welches Zugmodule. gemessen bei 23 °C gemäß der Norm ISO R527, in longitudinaler Richtung und in transversaler Richtung von wenigstens 3000 MPa und ein Außendurchmesser/Dicke-Verhältnis von 10 bis 100 aufweist.

2. Rohr gemäß Anspruch 1, dadurch gekennzeichnet, daß es aus einem von Ethylen abgeleiteten Polymer besteht.

3. Rohr gemäß Anspruch 1, dadurch gekennzeichnet, daß es aus einem von Propylen abgeleiteten Polymer besteht.

4. Rohr gemäß einem der Ansprüche 2 oder 3, dadurch gekennzeichnet, daß das Polymer ein Homopolymer ist.

5. Rohr gemäß Anspruch 1, dadurch gekennzeichnet, daß es aus Polyethylen hoher Dichte besteht.

6. Rohr gemäß Anspruch 1, dadurch gekennzeichnet, daß es aus einem Polyolefin mit einem Fließindex unter 21,6 kg kleiner als 10 gemäß der Norm ASTM D 1238 (g/10 min) besteht.

7. Rohr gemäß Anspruch 1, dadurch gekennzeichnet, daß es aus einem Polyolefin besteht, das eine solche Molekulargewichtsverteilung aufweist, daß das Verhältnis zwischen dem Gewichtsmittel seines Molekulargewichts und dem Zahlenmittel seines Molekulargewichts wenigstens gleich 10 ist.

8. Rohr gemäß einem der vorhergehenden Ansprüche, das einen Elastizitätsmodul von wenigstens 4300 MPa in longitudinaler Richtung aufweist.

**Claims**

1. Biaxially oriented polyolefin tube obtained by direct extrusion, having tensile moduli, measured at 23°C according to the ISO R527 standard, in the longitudinal direction and in the transverse direction, of at least 3000 MPa and an external diameter/thickness ratio of 10 to 100.

2. Tube according to Claim 1, characterized in that it consists of a polymer derived from ethylene.

3. Tube according to Claim 1, characterized in that it consists of a polymer derived from propylene.

4. Tube according to either of Claims 2 and 3, characterized in that the polymer is a homopolymer.

5. Tube according to Claim 1, characterized in that it consists of high-density polyethylene.

6. Tube according to Claim 1, characterized in that it consists of a polyolefin having a melt flow index at 21.6 kg of less than 10 according to the ASTM D 1238 standard (g/10 min).

7. Tube according to Claim 1, characterized in that it consists of a polyolefin having a molecular weight distribution such that the ratio of its weight-average molecular weight to its number-average molecular weight is at least equal to 10.

8. Tube according to one of the preceding claims, having a modulus of elasticity in the longitudinal direction of at least 4300 MPa.